# EUROPEAN PATENT SPECIFICATION

(11) **EP 1 657 533 B1**
(45) Date of publication and mention of the grant of the patent: **09.01.2008**
(21) Application number: 04425848.1
(22) Date of filing: 15.11.2004
(51) Int. Cl.: G01F 23/26, G01F 23/00

(54) **Level sensor extracting its operating power from an indicating instrument**
Füllstandssensor, der seine Betriebsenergie aus einem Anzeigeinstrument gewinnt
Capteur de niveau extrayant sa source d'alimentation dans un dispositif d'affichage

(43) Date of publication of application: 17.05.2006
(73) Proprietor: S.I.E.M. S.r.l., 73100 Lecce (IT)
(72) Inventor: Aguglia Jorge Miguel, Giorgio, 73100 Lecce (IT)
(74) Representative: Robba, Eugenio

(56) References cited:
- EP-A- 0 261 353
- FR-A- 2 646 906
- US-B1- 6 580 177

## Description

### TECHNICAL FIELD

Present invention refers in general to a sensor for measuring liquid levels in a tank, for example fuel levels in a fuel tank.

In particular, present invention refers to a capacitive level sensor adaptable to the tank dimensions.

### BACKGROUND ART

Sensors are known in the art for measuring fuel level, for example, in nautical, automotive or aeronautical field.

The sensors in the above fields are, generally, of resistive or capacitive type and are connected to measuring or indicator instruments that display the measurements taken by the sensors.

From Publicatipon FR-A-2646906 a device for veryfying the presence of a fluid at a predetermined level is known.

Such a device comprises a probe or sensor, including a photo-emitter and a photo-resistor, a support, arranged to be fixed to a fluid container, and an external electronic circuit arranged to power the probe and manage resistance variations of the photo-resistor when the fluid reaches the photo-emitter.

From publication EP-A-0261353 a device is known for measuring, inter alia, the level of a non conductive o quasi conductive liquid.

Such a device provides a sensor made of a LC circuit coupled by means of an inductive circuit to an external active device arranged to power the LC circuit.

Both the known devices require that the sensor is powered by an external power source.

A technical problem in relation to the fuel sensors, capacitive sensors in particular, is that the above sensors require to be connected both to a power supply source and to an instrument for indicating the levels measured by the sensor.

As a matter of fact, capacitive type sensors require for operating at least three connection wires, at least one of which is dedicated to the power supply.

Obviously, such a situation involves higher costs and, in particular, higher error risks at the assembling and connecting stages.

A further particularly relevant problem present both in capacitive and resistive sensors is that the sensors do not adapt to the tank length or depth. They should be adjusted in the manufacturing phase, for example at the sensor building plant, to the type and size of the tank in which the sensor is installed.

Another problem is related to the precision of measurements taken by the sensors. They do not guarantee the exact measurement of refuelling and consumption levels.

As a matter of fact, as known, resistive sensors are intrinsically inaccurate.

Similar problems exist for capacitive sensors as well.

The technique used by the capacitive sensor for determining the fuel level is based on the change of permittivity measurement in the dielectric filled between the plates. Two electrodes facing each other are immersed in the liquid. By varying their free surface, the different dielectric constant (permittivity) of the liquid εᵣε₀ and of its vapour (or air) (≈ε₀), is able to provide a capacity change that may be sensed by corresponding capacitive detectors.

The capacitive detectors in the sensor working field are able to convert the dielectric constant changes into an electric signal used for controlling by a measuring instrument.

As known, in the sensors that do use such an effect it is important to monitor and adjust the detected values as a function of the operating frequency range (that is the frequency used by the sensor for communicating with the instrument) and possible external frequency signals and temperature changes. This is due to the fact that the dielectric constant, in a great number of materials, changes with the temperature and frequency (typically the dielectric constant decreases when the above quantities increase).

Hence taking into account the frequency is very important because the many level sensors are used in plastic tanks. Such a material is completely penetrable by external frequency signals.

In summary, Applicant notes that as of now no commercially known liquid level sensors or detectors, of capacitive type in particular, may be installed without any connection to an external power supply.

Moreover, Applicant notes that the existing sensors, the capacitive type in particular, do not demonstrate good precision of the measurement because they are sensitive to many factors that influence their functioning. In particular, the work of the known sensors is easily influenced by the operating frequency and/or by the frequency of external signals.

### DISCLOSURE OF THE INVENTION

The object of the present invention is a sensor that resolves the prior art known problems.

According to the present invention such an object is achieved by a sensor for the levels of fuels or other liquids that has the features set forth in the claims that follow.

The invention also relates to a method for sensing liquid levels, as well as to a computer program product loadable in the memory of at least one computer or microprocessor and including software code portions for performing the steps of the invented method when the product is run on at least one computer or microprocessor. The claims that follow are an integral part of the teaching according to the present invention.

According to a preferred embodiment of the present invention the sensor is configured for connection with the measuring instrument without requiring any electric power supply.

According to the further characteristic of the present invention the sensor is configured for being selectively adapted to the measuring instruments of different types. Because of this feature the sensor is able to measure accurately the levels of liquids unaffected by the operating frequency or the frequency of external signals and by the temperature of the environment.

In addition, the sensor is adaptable in field to the tank dimensions: it is possible to cut the sensor probe to accommodate the depth of the tank without compromising the measurement accuracy.

### BRIEF DESCRIPTION OF DRAWINGS

These and further features and advantages of the present invention will be apparent more clearly from the following detailed description of a preferred embodiment, provided by way of non limiting examples with reference to the attached figures, wherein:
Figure 1 presents a general view of the sensor according to the invention in combination with a measuring instrument;
Figure 2 presents a probe used in the sensor in Figure 1; Figure 3 presents a general block diagram of an electronic device used in the sensor from Figure 1; and
Figure 4 presents a detailed block diagram of a control circuit used in the sensor from Figure 1.

### BEST MODE OF CARRYING OUT THE INVENTION

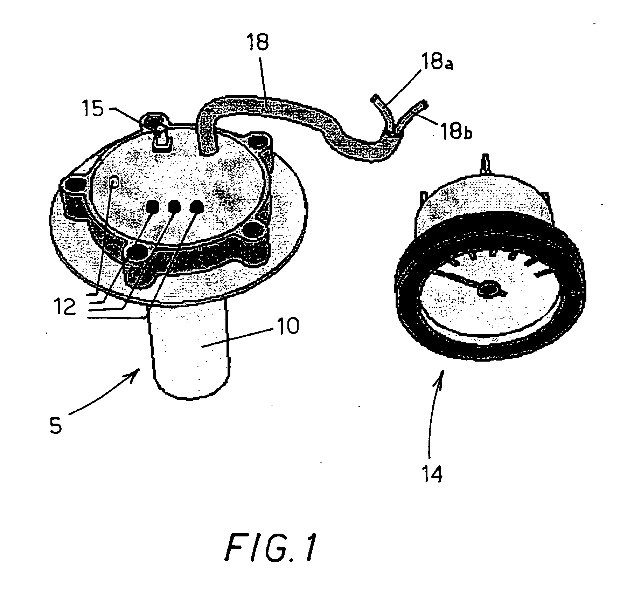

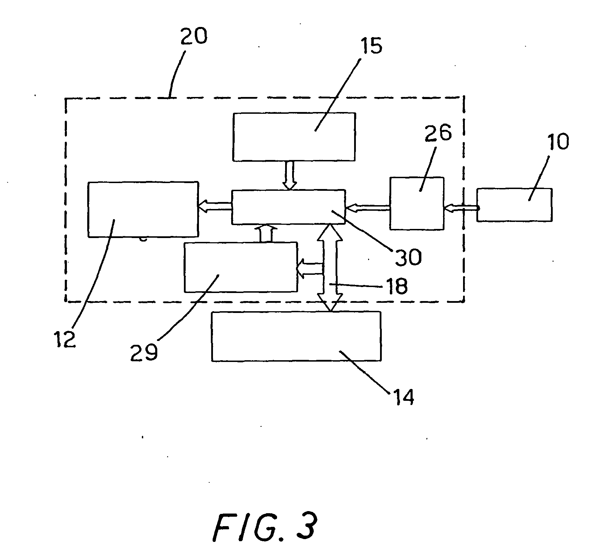

With reference to Figure 1, a level sensor (sensor) 5, according to the invention, for example a capacitive one, comprises a probe 10 and an electronic device 20 (Fig.1 and Fig.3).

The electronic device (device) 20 is connected to a measuring or indicator instrument (instrument or indicator) 14 of a certain type by means of the connection cable 18 that comprises, for example, two connection wires, 18a and 18b respectively.

The indicator 14 displays, in a known way, the fuel levels measured by the sensor 5.

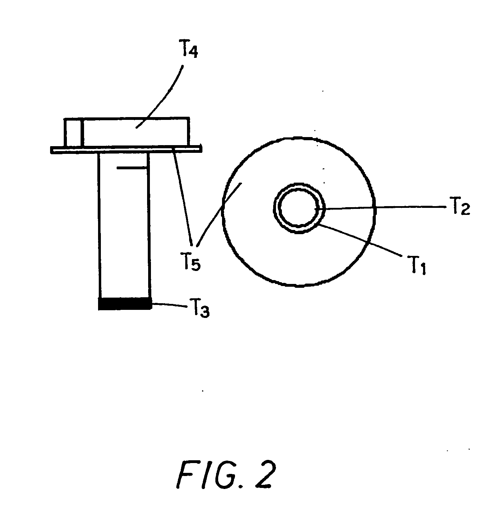

The probe 10 is apt to sense liquid levels in a tank and is configured to detect condensation as soon as it is immersed in a liquid with a certain dielectric constant. The probe comprises in the preferred embodiment (Fig.1 and Fig.2) two tubes T1 and T2. The tubes can be made, for example, of aluminium, brass or any other material that can serve as a condensation plate when the probe (10) is immersed in the liquid and that are resistant to the corrosion by the liquids.

The two tubes, for example, may have external diameters ∅(T1)= 30mm and ∅(T2)= 25mm and thickness of 1 mm and may be put together in such a way as to allow a capacitive coaxial probe to be cut, in a range between 15 cm to 100 cm. This will permit to adapt the sensor to the depth of the tank used.

According to a preferred embodiment, the probe 10 is designed to comprise a lower protective plug T3.

According to a preferred embodiment, the probe 10 comprises an universal type flange T4 that has 5 holes that guarantee secure fixing to the tank, and a gasket T5, known per se.

Preferably, the flange T4 is made of Nylon and the gasket T5 is made of Biton but, as known by a skilled in the art, any material with suitable characteristics may be used.

The flange T4 and the gasket T5 are made of materials that guarantee a very reliable product, resistant both to the corrosion by temperature and/or by hydrocarbon pressure and to the critical environmental conditions.

The above characteristics allow the probe to have the following qualities:
- very reliable, resistant to the critical environmental conditions;
- free from mechanical friction because of its capacitive nature;
- small overall size;
- completely watertight;
- having an excellent fitting to the tank;
- highly resistant to high pressures;
- highly resistant to chemical agents;
- having a protection standard according, for example, to the regulations CEI EN 60529 and a protection class IP (Ingress Protection) 68 (protection in conditions of permanent immersion to a declared depth) and IP 67 (protection in conditions of temporary immersion to a depth of about 1 m for 30 minutes).

The electronic device 20 (Fig.1 and Fig.3) is placed between the probe 10 and the instrument 14. It comprises, for example, a plurality of light devices, such as externally visible LEDs (light emitter diodes) 12, and a tuning or actuator device (button) 15 that allows to calibrate the probe 10 as will be explained later in detail.

The device 20 further comprises a control circuit (microcontroller) 30, as for example a microcontroller manufactured by Cypress Semiconductor Corporation. The microcontroller 30 is configured to enable analog signals management by means of digital and analog internal blocks, as will be disclosed later in detail.

In addition, The electronic device 20 comprises an interface circuit 26 (Fig.3) - for example a monostable circuit connected with an electronic filter, of known type, which in its turn is connected to the probe 10 and configured for converting capacitive signals generated by the probe 10 into electric signals that are managed by the microcontroller 30.

In particular, according to a preferred embodiment, the interface circuit 26 comprises a monostable circuit and a low-pass filter, known per se, apt to adjust or convert the signal that comes from the probe 10.

In addition to this, the monostable is apt to convert the capacity value received into a signal having a frequency proportional to such a capacity value.

The electronic filter is apt to filter the frequency signal and to take the mean value. This mean value is the input signal to be processed by the microcontroller 30.

Finally, the electronic device 20 comprises, in a preferred embodiment, a power supply extracting circuit (filter) 29, for example a low-pass filter, connected to the microcontroller 30 and configured for extracting the mean value of the signal sent to the instrument 14 and for using such a signal for providing power supply to the rest of the sensor 10, in the form, for example, of a voltage.

Thanks to such a filter 29, it is possible to obtain a sensor or system 5 auto-regenerative, capable of making use of the signal sent to the instrument 14 for providing power supply to the system itself 5.

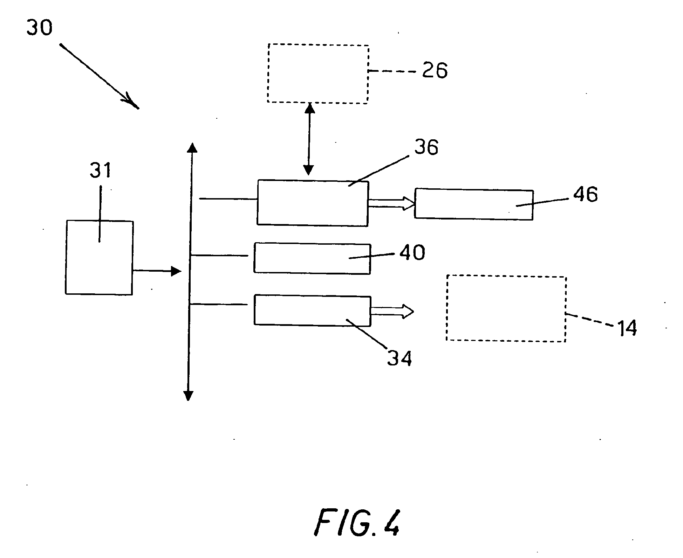

The microcontroller 30, in a preferred embodiment, comprises, for example, a CPU 31 (Fig.3 and Fig.4), of known type, an analog/digital converter (A/D converter) 36, a random access memory (RAM) 40, a read only memory (EPROM) 46, a PWM (Pulse Width Modulation) block) 34, all of known type and connected among them by means of a data, addresses and commands bus (BUS).

The RAM 40 is preferably configured for storing on a suitable table, e.g. a look up table, on the basis of computer program modules (firmware and/or software modules) implemented in the sensor 5 design phase, parameters corresponding or pertaining to a predetermined list of instruments connectable to the sensor 5.

The parameters may comprise, for example, temperature values, operative frequency intervals or ranges, or other parameters that permit, for example, as known to a skilled in the art, the calibration of the sensor 5, as will be disclosed later on in detail, and/or the attainment in the measurement phase of high precision.

The EPROM 46 is preferably configured, on the basis of computer program modules (firmware and/or software modules) implemented in the sensor 5 design phase, for storing maximum and minimum level values as measured during the sensor 5 calibration phase, whereby such values can not be lost in case of power outage.

The analog/digital converter (A/D converter) 36 (Fig.3 and Fig.4), of known type, is connected to the interface circuit 26 and is configured for converting input signals that have a certain mean value and that come from the interface circuit 26, into digital signals. These digital signals are apt to be processed by means of the CPU 31 of the microcontroller 30.

The PWM block (Pulse Width Modulation) 34 is connected by means of the connection cable 18 to the instrument 14.

The PWM block 34, of known type, is configured for generating a square-wave signal having a determined length or duty cycle, for example, on the basis of a comparison made, for example by the CPU 31, between the mean value in input and the look up table values stored on the RAM 40. In other words, the PWM block 34 is configured for generating a square-wave having a duty cycle determined as a function of the mean value in input and of the instrument effectively connected to the sensor 5.

Naturally, such a square wave is the input signal to the indicating instrument 14.

The operation, the sensor 5 described here, comprises, in the preferred embodiment of the present invention, a calibration or set-up phase and a real use phase.

The calibration and/or real use phase may be, for example, implemented in the sensor 5 by means of suitable computer programs or computer program modules (software and/or firmware) stored on the electronic device 20.

The calibration phase is suitable for enabling to memorise or store, for example on the EPROM 46, both the maximum and minimum fuel level that the sensor 5 can measure and the type of the instrument 14 to be connected to the sensor 5.

Of course, such a calibration phase may be replaced by a programming phase wherein the expected above values are stored on the EPROM 46.

During the real use phase the levels of liquids or fuels measured inside the tank are displayed on the screen of the instrument 14.

### CALIBRATION

During the calibration phase, the level sensor 5 is connected to the instrument 14, for example, by means of the wires 18a and 18b. The sensor is connected to the instrument for measuring the fuel level in a tank, but without any power supply to the instrument 14.

In the preferred embodiment, it is expected that the button 15 is pressed and kept pressed while the instrument is turned on and until at least one LED 12 is lighted, for example a LED arranged for signalling a correct connection to the instrument 14. Such an operation will enable the sensor 5 to store a minimum level value.

At that time, the button 15 is released and the probe 10 is vertically immersed in a tank previously filled with, for example, fuel, up to reach, for example, a predetermined nick of the probe 10, that will indicate the maximum level to be memorised or stored on the electronic device 20 of the sensor 5.

The button 15 is pressed again and kept pressed until, for example, the LED 12 previously lighted becomes turned off.

At that time, the instrument 14 connected to the sensor 5 is selected by repeatedly pressing the button 15 until a predetermined number of LEDs 12 lights up according to a configuration or combination corresponding to the connected instrument.

Such an operation allows to complete the calibration and to enable the electronic device 20 to memorize, for example on the EPROM 46, the maximum and minimum level values, and the parameters pertinent to the instrument or type of instrument associated or connected to the sensor 5.

### INSTALLATION AND USE

Installation and start of work is made by connecting the sensor 5 to the indicating instrument 14 through the wires 18a and 18b and by, thereafter, verifying the lighting of at least one of the LEDs 12, for example a LED arranged for signalling a correct connection to the instrument 14.

If the LED does not light, this could indicate, for example, a connection with an incorrect polarity and, in such a condition, it will be necessary to repeat the connection phase by altering the wires 18a and 18b.

In normal use the CPU 31, following the reception and storing of the level values measured by the probe, compares through the A/D converter 36 the received signal with the maximum and minimum level values stored on the EPROM 46 and, taking into account the look up table stored on the RAM 40 generates through the PWM block 34 a square wave that has the length or duty cycle in conformance with the characteristics of the connected instrument 14.

According to one of the features of present invention, the mean value of the square wave, generated by the PWM block 34, is extracted by the power supply extracting circuit 29 in the form of an electric voltage adequate for powering the sensor 5 itself. Advantageously, thanks to such a feature, the capacitive sensor according to present invention may be connected to the instrument without requiring any power supply.

As a matter of fact, thanks to the above feature of the present invention, the sensor is suitably designed for not requiring power supply (the power supply is directly extracted from the indicating instrument it is interfaced with) and, preferably, in such a way as to reduce the number of connections to only two wires directly connected, for example, to the proper terminals of the indicating instruments.

Therefore the sensor according to the present invention may be installed instead of resistive sensors that, as known, require only two wires for installation and operation.

Moreover, the sensor according to the present invention, allows for very stable measurements, obtained by accurately optimising the adjustment of the measured values.

Such an adjustment is a function of the frequency and of the operative temperature and is preferably obtained by storing on the sensor 5 a table (look up table) including parameters which represent the respective characteristics of a set of instruments connectable to the sensor 5.

The use of a parameter table, permits the measurement of the fuel level independently both of the frequency and of the operative temperature.

Furthermore, the sensor adjustment through the calibration and the use of a look up table make the device insensitive to basic capacitance changes and permit the sensor, as disclosed, to measure and filter possible undesirable capacitive changes that may arise in the tank.

The firmware or software modules (management software), implemented in the device, are configured for permitting, as professionals would appreciate, the self-regulation of the measured values by filtering the values corrupted by humidity and by dirt that may deposit on the not immersed probe surface and that may distort the sensor output values.

The sensors, as disclosed, are apt to measure absolute changes of capacitance values with a very high sensitivity, such as few pF changes.

Moreover, the sensors according to the present invention, may be protected, by means of suitable shields, from any external noise.

Thanks to this additional characteristic, the sensor may be installed near high frequency devices, without being damaged by electronic noise or by electrostatic emissions. Such a further characteristic is important because the level sensors are used inside of the tanks made mainly of plastic material. In such conditions scraping against the tanks walls may create very high electrostatic fields and, consequently, electrostatic emissions destructive to the electronic devices of the sensor.

Lastly, as the sensor is capable of auto-learning, it is possible to configure the sensor in order to measure the maximum and minimum liquid level inside the tank and to automatically interface with an indicating instrument.

Obvious changes and variations may be possible to the above disclosure, as regards dimensions, shapes, materials, components, circuit elements, connections and contacts, as well as circuitry, depicted construction and functioning method details without departing from the scope of the invention as defined by the claims that follow.

## Claims

1. Sensor of liquid levels in a tank comprising
- a probe (10) arranged to measure a liquid level in a tank and to generate first electric signals dependent on said level;
- an electronic device (20) connected to said probe (10) and arranged to receive said first electric signals and to generate second electric signals adapted to be managed by an indicator instrument (14) connectable to said electronic device (20) and arranged to display an information corresponding to said level;
**characterised in that** said electronic device (20) comprises
- a power extracting circuit (29) arranged to extract, from said second electric signals, power signals adapted to provide power supply to said sensor (5).

2. Sensor according to claim 1 **characterised in that** said second electric signals comprise at least a square wave having a certain length or duty cycle and **in that** said power extracting circuit (29) comprises
- a filter (29) configured for
- extracting from said square wave a mean value; and
- generating a respective voltage signal adapted to provide power supply to said sensor (5).

3. Sensor according to claim 1 **characterised in that** said electronic device (20) comprises
- a control circuit (30) having stored therein a parameter table including parameters representing respective characteristics of a plurality of indicator instruments (14) connectable to said level sensor (5); and
- program modules configured for selectively adapting the sensor, on the basis of said parameters table, to a certain instrument selected from said plurality of indicator instruments (14)

4. Sensor according to claim 3 **characterised in that** said parameters table comprises parameters selected from the group comprising:
- temperature values;
- frequency values.

5. Sensor according to claim 3 comprising
- a plurality of light effect devices (12) actuatable on the basis of said program modules in accordance with configurations corresponding each to at least one instrument of said plurality of indicator instruments (14) connectable to said level sensor (5).

6. Sensor according to claim 3 comprising
- at least an actuator device (15) configured for activating said program modules.

7. Sensor according to claims 1 to 6 **characterised in that** said sensor (5) is a sensor of capacitive type.

8. Sensor according to claim 1 to 7 **characterised in that**
- said probe (10) is dimensionally adaptable to the dimensions of said tank.

9. Method for sensing liquid levels in a tank through a sensor (5) having a probe (10) and an electronic device (20) connected to said probe (10), the method comprising the steps of
- generating through said probe (10) first electric signals dependent on a liquid level;
- receiving through said electronic device (20) said first electric signals and generating second electric signals adapted to be directly managed by an indicator instrument (14) for displaying an information corresponding to said level; and
**characterised in that** it comprises the step of
- extracting from said second electric signals power signals adapted to provide power supply to said sensor (5).

10. Method according to claim 9 comprising the step of
- determining the characteristics of said second electric signals on the basis both of said first electric signals and of parameters pertaining to a plurality of indicator instruments (14) connectable to said sensor (5).

11. Computer program module or set of computer program modules loadable in the memory of at least one electronic device (20) and including software code arranged to perform the method of any of claims 9 to 10.

## Patentansprüche

1. . Ein Sensor für Flüssigkeitsniveaus in einem Tank umfasst:
- eine zur Messung eines Flüssigkeitsspiegels in einem Tank und zur Erzeugung erster elektrischer Signale in Abhängigkeit von diesem Niveau angeordnete Sonde (10);
- eine an diese Sonde (10) angeschlossene elektronische Einrichtung (20), die zum Empfang dieser ersten elektrischen Signale ausgelegt ist, sowie zweite elektrische Signale zu erzeugen, die darauf abgestimmt sind, von einem, an die elektronische Einrichtung (20) anschließbarem Anzeigegerät (14) verarbeitet zu werden, das eine dem Niveau entsprechende Information anzeigt;
**dadurch gekennzeichnet, dass** die elektronische Einrichtung (20) Folgendes umfasst:
- einen Schaltkreis (29) zur Leistungsgewinnung, der dazu ausgelegt ist, von jenen zweiten elektrischen Signalen Leistungssignale zum Zweck der Leistungsversorgung jenes Sensors (5) zu extrahieren.

2. . Sensor nach Anspruch 1,
**dadurch gekennzeichnet, dass** jene zweiten elektrischen Signale zumindest eine Rechteckwelle mit bestimmter Länge oder Tastverhältnis aufweisen sowie **dadurch**, dass der Leistungsabrufkreis (29) einschließt
- ein Filter (29), ausgebildet zur Isolierung eines Mittelwertes aus der Rechteckwelle; und zur Erzeugung eines entsprechenden Spannungssignals, das auf die Lieferung der Leistungsversorgung des Sensors (5) abgestimmt ist.

3. . Sensor nach Anspruch 1,
**dadurch gekennzeichnet, dass** die elektronische Einrichtung Folgendes umfasst:
- einen Steuerkreis (30) in dem Parametertafeln gespeichert sind, einschließlich solcher Parameter, die den jeweiligen Kennwerten einer Vielzahl von an den Niveausensor (5) anschließbaren Anzeigeinstrumenten (14) entsprechen; sowie Programmmodule, die zur selektiven Anpassung des Sensors auf der Basis der Parametertafel für ein bestimmtes, aus jener Vielzahl von Anzeigeinstrumenten (14) ausgewähltes Instrument erstellt sind.

4. . Sensor nach Anspruch 3,
**dadurch gekennzeichnet, dass** die Parametertafel Parameter aufweist, die aus folgenden Gruppen ausgewählt wurden:
- Temperaturwerte;
- Frequenzwerte.

5. . Sensor nach Anspruch 3, der einschließt:
- eine Vielzahl von Lichteffekteinrichtungen (12), die auf der Grundlage der Programmmodule in Übereinstimmung mit den Auslegungen entsprechend jedem der mindestens einem Instrument jener Vielzahl von Anzeigeinstrumenten (14), die an den Niveausensor (5) anschließbar sind, betätigbar sind.

6. . Sensor nach Anspruch 3, der einschließt:
mindestens eine zur Aktivierung der Programmmodule konfigurierte Betätigungseinrichtung (15).

7. . Sensor nach Anspruch 1 bis 6,
**dadurch gekennzeichnet, dass** der Sensor (5) ein kapazitiver Sensor ist.

8. . Sensor nach Anspruch 1 bis 7,
**dadurch gekennzeichnet, dass** die Sonde (10) maßlich an die Dimensionen des Tanks angepasst werden kann.

9. . Verfahren zur Erfassung von Flüssigkeitsspiegeln in einem Tank durch einen Sensor (5) mit einer Sonde (10) und einer an die Sonde (10) angeschlossenen elektronischen Einrichtung (20), wobei das Verfahren folgende Schritte umfasst:
- Erzeugung erster elektrischer Signale in Abhängigkeit vom Flüssigkeitsspiegel durch die Sonde (10);
- Empfang dieser ersten elektrischen Signale durch die elektronische Einrichtung (20) und Ausbildung zweiter elektrischer Signale, die auf die direkte Verarbeitung durch ein Anzeigeinstrument (14) zur Darstellung einer dem Niveau entsprechenden Information abgestimmt sind; sowie
**dadurch gekennzeichnet, dass** es folgenden Schritt aufweist:
- Ableitung von Leistungssignalen aus den zweiten elektrischen Signalen, die zur Leistungsversorgung des Sensors (5) ausgelegt sind.

10. . Verfahren nach Anspruch 9, das folgenden Schritt aufweist
- Festlegung der Kennwerte der zweiten elektrischen Signale auf der Grundlage sowohl der ersten elektrischen Signale als auch der Parameter, die zu einer Vielzahl von an den Sensor (5) anschließbaren Anzeigeinstrumenten (14) gehören.

11. . Computerprogrammmodule oder Sätze von Computerprogrammmodulen, die in den Speicher von mindestens einer elektronischen Einrichtung (20) geladen werden können und Softwarecodes einschließen, die zur Durchführung des Verfahrens nach einem der Ansprüche 9 bis10 eingerichtet sind.

## Revendications

1. Capteur de niveaux de liquide dans un réservoir comprenant :
- une sonde (10) agencée pour mesurer un niveau de liquide dans un réservoir et pour générer des premiers signaux électriques en fonction dudit niveau ;
- un dispositif électronique (20) connecté à ladite sonde (10) et agencée de façon à recevoir lesdits premiers signaux électriques et à générer des seconds signaux électriques adaptés pour être traités par un instrument indicateur (14) qui peut être connecté audit dispositif électronique (20) et agencé pour afficher une information correspondant audit niveau ;
**caractérisé en ce que** ledit dispositif électronique (20) comprend :
- un circuit d'extraction d'alimentation (29) agencé pour extraire, à partir desdits seconds signaux électriques, des signaux d'alimentation adaptés pour fournir une alimentation électrique au dit capteur (5).

2. Capteur selon la revendication 1 **caractérisé en ce que** lesdits seconds signaux électriques comprennent au moins une onde rectangulaire ayant une certaine longueur ou un certain cycle opératoire et **en ce que** ledit circuit d'extraction d'alimentation (29) comporte
- un filtre (29) configuré pour
- extraire de ladite onde rectangulaire une valeur moyenne ; et
- générer un signal de tension respectif adapté pour fournir une alimentation électrique audit capteur (5).

3. Capteur selon la revendication 1 **caractérisé en ce que** ledit dispositif électronique (20) comprend
- un circuit de commande (30) ayant stocké en lui une table de paramètres incluant des paramètres représentant des caractéristiques respectives d'une pluralité d'instruments indicateurs (14) pouvant être connectés audit capteur de niveau (5) ; et
- des modules de programme configurés pour adapter sélectivement le capteur, sur la base de ladite table de paramètres, à un certain instrument sélectionné parmi ladite pluralité d'instruments indicateurs (14).

4. Capteur selon la revendication 3 **caractérisé en ce que** ladite table de paramètres comporte des paramètres sélectionnés à partir du groupe comportant :
- des valeurs de température ;
- des valeurs de fréquence.

5. Capteur selon la revendication 3 comprenant
- une pluralité de dispositifs à effet lumineux (12) pouvant être actionnés sur la base desdits modules de programme selon des configurations correspondant, chacune, à au moins un instrument de ladite pluralité d'instruments indicateurs (14) pouvant être connectés audit capteur de niveau (5).

6. Capteur selon la revendication 3 comprenant
- au moins un dispositif actionneur (15) configuré pour activer lesdits modules de programme.

7. Capteur selon les revendications 1 à 6 **caractérisé en ce que** ledit capteur (5) est un capteur de type capacitif.

8. Capteur selon la revendication 1 à 7 **caractérisé en ce que**
- ladite sonde (10) peut être adaptée au niveau dimensionnel aux dimensions dudit réservoir.

9. Procédé permettant de détecter des niveaux de liquide dans un réservoir par l'intermédiaire d'un capteur (5) comportant une sonde (10) et un dispositif électronique (20) connecté à ladite sonde (10), le procédé comprenant les étapes consistant à :
- générer par l'intermédiaire de ladite sonde (10) des premiers signaux électriques en fonction du niveau de liquide ;
- recevoir à travers ledit dispositif électronique (20) lesdits premiers signaux électriques et générer des seconds signaux électriques adaptés pour être directement gérés par un instrument indicateur (14) afin d'afficher une information correspondant audit niveau ; et
**caractérisé en ce qu'**il comporte l'étape consistant à :
- extraire à partir desdits seconds signaux électriques des signaux d'alimentation adaptés pour fournir une alimentation électrique au dit capteur (5).

10. Procédé selon la revendication 9 comprenant l'étape consistant à :
- déterminer les caractéristiques desdits seconds signaux électriques sur la base à la fois desdits premiers signaux électriques et de paramètres appartenant à une pluralité d'instruments indicateurs (14) pouvant être connectés au dit capteur (5).

11. Module de programmes d'ordinateur ou ensemble de modules de programmes d'ordinateur qui peut (peuvent) être chargé(s) dans la mémoire d'au moins un dispositif électronique (20) et comportant un code logiciel agencé pour exécuter le procédé selon l'une quelconque des revendications 9 à 10.
